(19)

Europäisches
Patentamt
European
Patent Office
Office européen
des brevets

(11)  **EP 4 471 463 A2**

(12)  **DEMANDE DE BREVET EUROPEEN**

(43) Date de publication:
**04.12.2024 Bulletin 2024/49**

(21) Numéro de dépôt: **24200054.5**

(22) Date de dépôt: **21.08.2019**

(51) Classification Internationale des Brevets (IPC):
*G01V 1/30* *(2006.01)*

(52) Classification Coopérative des Brevets (CPC):
**G01V 1/366; G01V 1/28; G01V 1/306;**
G01V 2210/612

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.08.2018 FR 1857560**

(62) Numéro(s) de document de la (des) demande(s)
initiale(s) en application de l'article 76 CBE:
**19755919.8 / 3 841 407**

(71) Demandeur: **Centre National de la Recherche
Scientifique
75016 Paris (FR)**

(72) Inventeur: **VOISIN, Christophe
38100 GRENOBLE (FR)**

(74) Mandataire: **Hautier IP
20, rue de la Liberté
06000 Nice (FR)**

Remarques:
Cette demande a été déposée le 12.09.2024 comme
demande divisionnaire de la demande mentionnée
sous le code INID 62.

(54)  **PROCÉDÉ DE DÉTECTION D'UN FLUIDE ET SYSTÈME ASSOCIÉ**

(57)  L'invention concerne un procédé de détection
d'un fluide, comprenant au moins une étape de :
- mesure par au moins un capteur (12) d'une onde se
propageant dans un environnement (11) de l'onde, pour
obtenir au moins un signal mesuré, l'onde étant notamment une onde mécanique,

- découpage du signal mesuré sur une pluralité d'intervalles temporels de découpage de durée prédéfinie pour
obtenir des échantillons du signal mesuré,
- calcul de la cohérence temporelle des échantillons, et
- détermination de la présence du fluide à l'aide de la
cohérence temporelle calculée.

FIG.1

EP 4 471 463 A2

**Description**

La présente invention concerne un procédé de détection d'un fluide. La présente invention a également pour objet un système de détection d'un fluide.

L'invention concerne le domaine de la détection de fluides dans un endroit spécifique et plus particulièrement le domaine de la prospection géophysique.

L'article de Christophe Voisin et al. intitulé « Groundwater Monitoring with Passive Seismic Interferometry » décrit une application d'interférométrie sismique passive dans le contexte de mesures effectuées en France.

Le document WO 2016/063125 A1 décrit un procédé d'imagerie du sous-sol proche. L'article de Christophe Voisin et al. intitulé « Seismic noise monitoring of the water table in a deep-seated, slow-moving landslide » décrit un procédé de surveillance. Le document WO 00/73820 A1 décrit un procédé de traitement de données sismiques. Le document US 5,563,949 décrit un procédé de traitement d'un signal sismique. Le document WO 2017/184340 A1 décrit un procédé de mesure d'une formation terrestre.

Il est connu des procédés de prospection sismique qui permettent de prendre connaissances des structures géologiques en profondeur d'un endroit grâce à l'analyse des échos d'ondes mécaniques.

Par exemple, dans de tels procédés, des ondes mécaniques sont mesurées par un grand nombre de capteurs disposés à des positions différentes. Les mesures effectuées par les capteurs sont traitées pour obtenir des informations sur un changement de vitesses d'ondes mécaniques dans le sol. Par la détection d'un tel changement de vitesse, des fluides situés en profondeur sont ainsi détectés.

Cependant, de tels procédés ne sont pas entièrement satisfaisants. En particulier, ces procédés sont compliqués à mettre en oeuvre à cause du grand nombre de capteurs et des installations complexes de transmission et de traitement de signaux.

Il existe un besoin pour un procédé de détection de mise en oeuvre plus simple, garantissant une détection de fluides au moins aussi précise.

Pour cela, la présente description porte sur un procédé de détection comprenant au moins une étape de :

- mesure par au moins deux capteurs d'ondes se propageant dans un environnement susceptible de comporter le fluide enfoui, pour obtenir au moins deux signaux mesurés, les ondes étant notamment des ondes mécaniques, les capteurs étant positionnés deux à deux à une distance donnée,
- filtrage de chaque signal mesuré dans une gamme de fréquences prédéfinie pour obtenir un premier signal fréquentiel $S_{trans1}$ et un deuxième signal fréquentiel $S_{trans2}$ et
- égalisation du premier signal fréquentiel $S_{trans1}$ et du deuxième signal fréquentiel $S_{trans2}$ pour obtenir un premier signal égalisé $S_{eg1}$ et un deuxième signal égalisé $S_{eg2}$ et ensuite un premier signal traité $S_{t1}$ et un deuxième signal traité $S_{t2}$,
- découpage de chaque signal traité $S_{t1}$ et $S_{t2}$ sur une pluralité d'intervalles temporels de découpage de durée prédéfinie pour obtenir des échantillons de chaque signal traité $S_{t1}$ et $S_{t2}$,
- normalisation de chaque échantillon par l'énergie du signal traité $S_{t1}$ et $S_{t2}$ correspondant ;
- calcul d'une corrélation croisée d'un échantillon du premier signal traité $S_{t1}$ avec un échantillon temporellement correspondant du deuxième signal traité $S_{t2}$,
- calcul de référence, lors de laquelle une référence est calculée,
- pour chaque couple de capteurs, calcul de la cohérence temporelle des échantillons sur la base des corrélations croisées calculées comprenant une comparaison d'une pluralité de corrélations croisées avec la référence, chaque corrélation croisée étant associée à un intervalle temporel de découpage, et
- détermination de la présence du fluide à l'aide de la cohérence temporelle calculée.

Suivant des modes de réalisation particuliers, le procédé de détection comprend une ou plusieurs des caractéristiques suivantes, prise(s) isolément ou suivant toutes les combinaisons techniquement possibles :

- lors de l'étape de découpage, chaque intervalle temporel de découpage présente une même durée, de préférence une durée comprise entre 5 minutes et 2 heures.
- la gamme de fréquences prédéfinie est comprise entre 30 secondes et 2 Hertz.
- la référence est la moyenne de corrélations croisées des échantillons de chaque signal mesuré pendant une période temporelle de référence.
- la période temporelle de référence est strictement supérieure au maximum des intervalles temporels de découpage, de préférence comprise entre 20 jours et 40 jours.
- la corrélation croisée CC est calculée comme suit :

$$CC(p,s) = E[(S_{t1}(p)\, S_{t2}(s)]$$

avec :

- $S_{t1}(p)$ la valeur du premier signal traité $S_{t1}$ à l'instant p,
- $S_{t2}(s)$ la valeur du deuxième signal traité $S_{t2}$ à l'instant s, et
- E(X) : l'espérance mathématique de X.
- le calcul de la cohérence temporelle est réalisé en outre en fonction de tableaux de valeurs comprenant des données techniques des signaux mesurés correspondant à des mesures de déplacement du fluide.
- Les ondes sont des ondes mécaniques.
- En alternative à la caractéristique précédente, les ondes sont des ondes électromagnétiques.
- un contrôleur met en oeuvre une suppression de données manquantes, le contrôleur déterminant alors le maximum de chaque corrélation croisée et définissant l'instant zéro au maximum.
- Le procédé est applicable à des signaux issus de milieu naturel ou à des signaux générés artificiellement.
- Les capteurs sont distincts deux à deux.
- Les capteurs sont identiques entre eux.
- Les capteurs sont synchronisés temporellement entre eux.

La présente description se rapporte également à un système de détection comprenant au moins deux capteurs et un contrôleur configurés pour mettre en oeuvre le procédé selon le premier aspect de l'invention.

D'autres caractéristiques et avantages de l'invention apparaîtront à la lecture de la description qui suit de modes de réalisation de l'invention, donnés à titre d'exemple uniquement et en référence aux dessins qui sont :

- figure 1, une représentation schématique d'un système de détection d'un fluide selon un premier mode de réalisation ;
- figure 2, une représentation schématique d'un système de détection d'un fluide selon un deuxième mode de réalisation ;
- figure 3, un ordinogramme d'un exemple de mise en oeuvre d'un exemple de procédé de détection ;
- figure 4, un graphe donnant une évolution d'un signal mesuré par un capteur en fonction du temps ;
- figure 5, un graphe donnant l'évolution du signal de la figure 4 après égalisation, et
- figure 6, un graphe montrant l'évolution temporelle de la corrélation du signal mesuré de la figure 4.

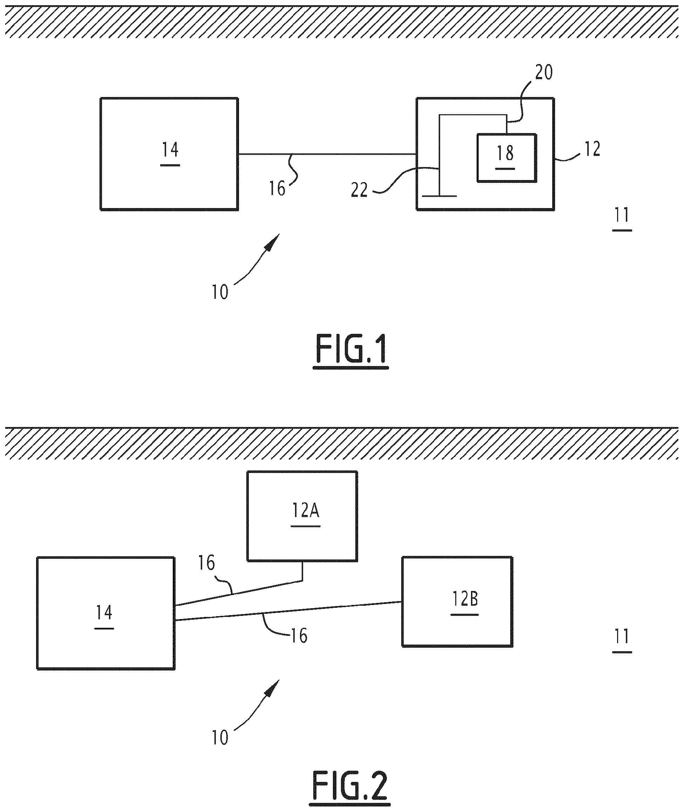

Un système de détection 10 pour détecter un fluide dans son environnement 11 est représenté sur les figures 1 et 2. L'environnement 11 est également appelé milieu.

Pour la suite, il est supposé que l'environnement 11 comporte un fluide enfoui dans le sol. Le système de détection 10 vise à détecter ce fluide. Autrement formulé, le système de détection 10 est propre à mettre en oeuvre un procédé de détection d'un fluide.

Le fluide est notamment un liquide ou un gaz. Le fluide est, par exemple du pétrole, de l'eau, des gaz naturels, du $CO_2$, de l'$H_2$ ou du $CH_4$.

L'environnement 11 est parcouru par des ondes mécaniques dont l'origine est indéterminée. L'ensemble de ces ondes constitue un bruit sismique ambiant. Ces ondes se propagent notamment dans la partie de l'environnement 11 qui contient le fluide à détecter. Ces ondes sont enregistrées par le système de détection 10.

Selon un premier exemple, le système de détection 10 comprend un capteur 12, un contrôleur 14 et une liaison 16.

Le capteur 12 est apte à mesurer l'onde mécanique générée par le fluide. Par le terme « mesurer », il est entendu que le capteur 12 est propre à obtenir l'amplitude et la fréquence de l'onde mécanique.

Dans un mode de réalisation, le capteur 12 est un capteur sismique, également appelé sismomètre. Le capteur sismique est notamment apte à mesurer le mouvement d'une masse géologique.

Le capteur 12 comprend, comme visible sur la figure 1, une masse 18 lourde connectée par au moins un ressort 20 à un cadre 22. Lors d'un mouvement de la terre, le cadre 22 bouge également. La masse 18 bouge très peu par rapport à un repère géographique, à cause de l'inertie de la masse 18. Le capteur 12 est configuré pour mesurer le mouvement relatif entre la masse 18 et le cadre 22.

Le capteur 12 est, par exemple, positionné sous la surface de la terre.

Selon l'exemple de la figure 1, le système de détection 10 comprend un seul capteur 12.

Le capteur 12 est connecté au contrôleur 14 par la liaison 16 assurant la transmission de données entre le capteur 12 et le contrôleur 14.

Le contrôleur 14 est apte à effectuer les calculs ou traitements de signaux du procédé de détection d'un fluide que le système de détection 10 est propre à mettre en oeuvre. Le contrôleur 14 est un ordinateur.

Plus généralement, le contrôleur 14 est un calculateur électronique propre à manipuler et/ou transformer des données représentées comme des quantités électroniques ou physiques dans des registres du contrôleur 14 et/ou des mémoires en d'autres données similaires correspondant à des données physiques dans des mémoires, des registres ou d'autres types de dispositifs d'affichage, de transmission ou de mémorisation.

Le contrôleur 14 comporte un processeur comprenant une unité de traitement de données et des mémoires. Le contrôleur 14 comprend, en outre, un lecteur de support d'informations configuré pour lire un programme d'ordinateur mémorisé sur un support lisible d'informations, non représenté. Le contrôleur 14 comprend, en outre, un produit programme d'ordinateur comprenant des instructions de programme.

Le contrôleur 14 est positionné à distance du capteur 12, par exemple à une distance strictement supérieure à 10 mètres. La distance entre deux objets est définie comme la distance minimale entre deux points appartenant respectivement à l'un des objets.

En variante, le contrôleur 14 est positionné proche du capteur 12. Par « proche », il est entendu une distance inférieure à un mètre. Le fait que le contrôleur 14 soit positionné proche du capteur 12 permet d'implémenter une liaison 16 courte et rend le système de détection 10 ainsi simple.

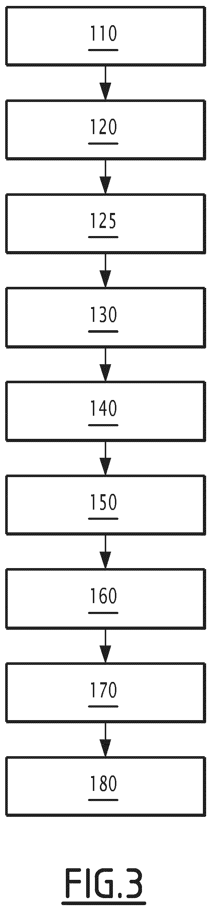

Le fonctionnement du système de détection 10 va maintenant être décrit selon un premier mode de réalisation, en référence à la figure 3 montrant un ordinogramme d'un exemple de mise en oeuvre d'un exemple de procédé de détection d'un fluide.

Le procédé de détection permet de détecter la présence d'un fluide dans l'environnement 11.

Le procédé de détection comprend une étape de mesure 110, une étape de filtrage 120, une étape d'égalisation 125, une étape de découpage 130, une étape de normalisation par l'énergie 140, une étape de calcul 150 d'une corrélation, une étape de définition d'une référence 160, une étape de calcul 170 d'une cohérence et une étape de détermination 180 de la présence d'un fluide.

Lors de l'étape de mesure 110, le capteur 12 mesure une onde ayant traversée le fluide dans l'environnement 11.

L'onde fait varier la position du cadre 22 du capteur 12. La masse 18 se déplace par rapport au repère géographique, c'est-à-dire d'une amplitude de déplacement, d'au moins un ordre de grandeur inférieure par rapport à l'amplitude du déplacement du cadre 22 par rapport au repère géographique.

Le capteur 12 mesure le déplacement relatif entre la masse 18 et le cadre 22, correspondant à un signal mesuré S au cours du temps. Le signal mesuré étant variable au cours du temps, il est également dénommé signal mesuré S(t).

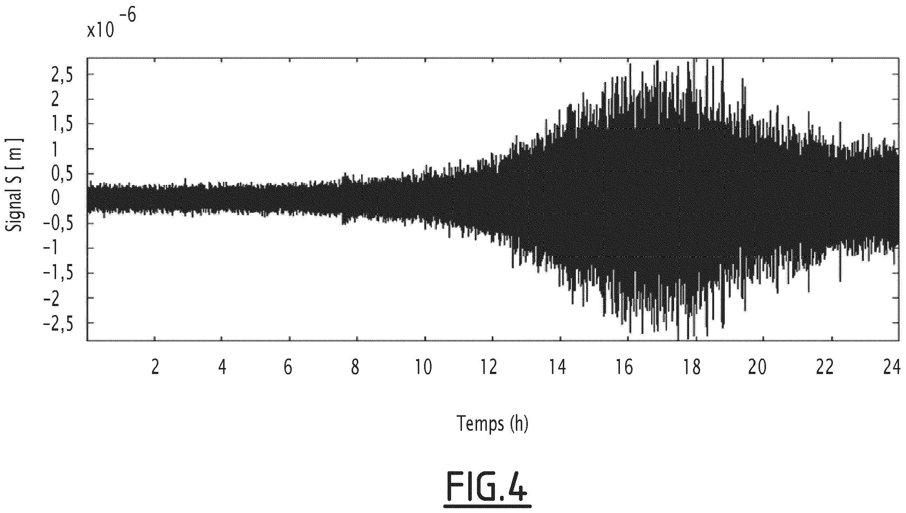

Un exemple d'évolution temporelle du signal mesuré S est visible sur la figure 4. Il est représenté en l'abscisse le temps et en ordonnée l'amplitude du signal mesuré S. L'amplitude maximale du signal mesuré S correspond à une amplitude de mouvement de dix micromètres.

Dans un exemple, si aucune donnée n'est mesurée à un instant donné, le contrôleur 14 ajoute une donnée de valeur nulle, afin de respecter la continuité du temps dans le signal mesuré S.

Sur la figure 4, le signal mesuré S correspond, par exemple, à un déplacement selon une direction verticale du sol. Selon d'autres exemples, le déplacement du sol selon une ou plusieurs directions horizontales est mesuré.

L'évolution temporelle du signal mesuré S est observée, sur une durée relativement longue, notamment entre 14 h et 24 h.

Le capteur 12 transmet le signal mesuré au contrôleur 14 pour traitement du signal mesuré S.

Lors de l'étape de filtrage 120, le signal mesuré S est filtré.

Le signal mesuré S est transformé par le contrôleur 14 du domaine temporel au domaine spectral pour obtenir un signal fréquentiel $S_{trans}$. La transformation est, par exemple, une transformation de Fourier, définie par la formule générale :

$$S_{trans}(\xi) = \int_{t1}^{t2} S(t) e^{-2\pi t \xi} dt$$

avec :

- $\xi$ une variable fréquentielle, et
- $t$ une variable temporelle.

Notamment, une période temporelle prédéfinie du signal mesuré S comprise entre un premier instant t1 et un deuxième instant t2 est étudié. La période temporelle est également appelée période de traitement.

Par exemple, la transformation est mise en oeuvre par une transformation de Fourier rapide (ou FFT de l'anglais « Fast Fourier Transform »).

Le contrôleur 14 filtre le signal fréquentiel $S_{trans}$ par un filtre passe bande. La bande passante du filtre est choisie de manière que des fréquences supérieures et inférieures aux fréquences extrêmes de la bande passante sont atténuées, afin d'obtenir uniquement des fréquences qui sont particulièrement pertinentes pour la détection d'un fluide à une profondeur donnée, par exemple une profondeur inférieure ou égale à 30 km.

Par « particulièrement pertinent pour la détection d'un fluide spécifique », il est entendu une bande de fréquences relative à une profondeur donnée.

La bande passante est, par exemple, comprise entre 1/30 Hz (30 secondes) et 2 Hz, notamment pour les applications concernant la croûte terrestre. Un tel choix de bande passante permet d'atténuer les fréquences parasites dans le signal fréquentiel $S_{trans}$. Les fréquences parasites sont, par exemple, des fréquences produites par le fonctionnement du capteur 12 ou par des autres installations techniques générant des vibrations.

En outre, le choix de la bande passante permet de restreindre le domaine des profondeurs d'investigation.

Lors de l'étape d'égalisation 125, le contrôleur 14 effectue une égalisation spectrale du signal transféré $S_{trans}$.

L'étape d'égalisation 125 vise uniquement à corriger des défauts ou des anomalies du bruit sismique ambiant. Ces défauts ou anomalies du bruit sismique ambiant proviennent notamment de sources susceptibles d'éteindre ou d'atténuer des ondes sismiques à une fréquence particulière ou de sources intermittentes. En d'autres termes, l'étape d'égalisation 125 permet ainsi d'obtenir des modifications dans le bruit sismique uniquement causés par un changement de l'environnement 11 et/ou du fluide.

L'égalisation spectrale est effectuée dans le domaine spectral pour mettre globalement l'amplitude du spectre du signal mesuré au même niveau pour toutes les fréquences, tout en respectant les variations locales et notamment sans modifier la phase du signal mesuré.

Une façon possible de réaliser l'égalisation spectrale est appelée blanchiment spectral. L'égalisation spectrale est un traitement du signal fréquentiel $S_{trans}$ pour obtenir un signal égalisé $S_{eg}$.

Le signal mesuré S(t) sur la fenêtre de traitement est représenté dans le domaine spectral par $\overline{S}(f)$, où $\overline{S}(f)$ est, par exemple, la transformée de Fourier du signal mesuré S(t). Un support spectral de $\overline{S}(f)$ est $[f_{min}\ f_{max}]$ ; $f_{min}$, par exemple, égale à 0,03 Hz et $f_{max}$ est, par exemple, égal 2 Hz. Il est définie une fenêtre d'apodisation $\prod$ comme suit :

$$\prod \;=\; \left(\sin\left(\frac{\pi}{2}\times\frac{f-f_{min}}{f_1-f_{min}}\right)\right)^2 \;\forall\, f \in [f_{min}\ f_1]$$

$$\prod \;=\; 1 \qquad\qquad \forall\, f \in\, ]f_1\ f_2[$$

$$\prod \;=\; \left(\cos\left(\frac{\pi}{2}\times\frac{f-f_2}{f_{max}-f_2}\right)\right)^2 \;\;\forall\, f \in [f_2\ f_{max}]$$

où

$$f_{min} < f_1 < f_2 < f_{max}$$

Il est alors réalisé le calcul suivant pour obtenir le signal égalisé $S_{eg}$ :

$$S_{eg} = \frac{\overline{S}(f)}{|\overline{S}(f)|}\times\prod$$

Ensuite, le signal égalisé $S_{eg}$ est retransformé en domaine temporel. Par exemple, une transformation de Fourier inverse est appliquée sur le signal égalisé $S_{eg}$ pour obtenir un signal traité St en domaine temporel. Le signal traité St est le signal mesuré S, filtré et égalisé.

La transformée de Fourier inverse correspond aux équations qui suivent :

$$S_t(t) = \int_{\xi 1}^{\xi 2} S_{trans}(\xi)e^{+2\pi\xi t}d\xi$$

avec :

- $\xi 1$ une première valeur de fréquence, et
- $\xi 2$ une deuxième valeur de fréquence.

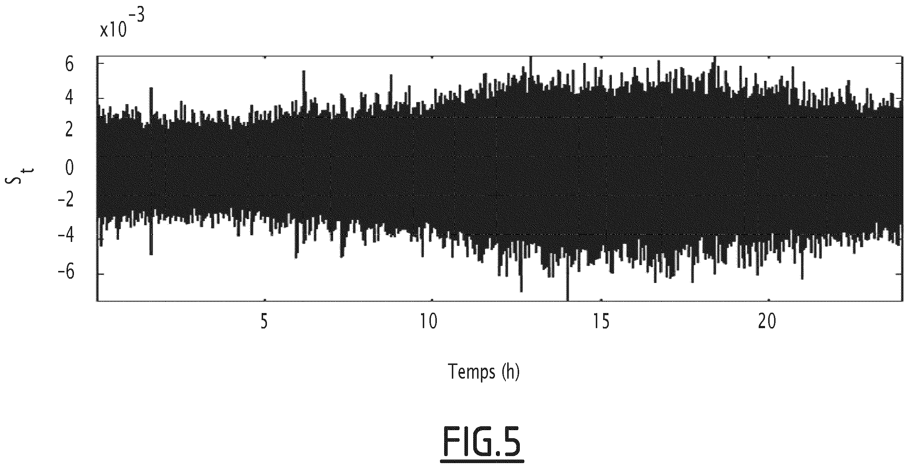

Sur la figure 5, un exemple du signal traité St est représenté. Il est représenté sur cette figure 5 en l'abscisse le temps et en ordonnée l'amplitude du signal traité St. L'amplitude du signal traité St est fonction du mouvement du sol. Par exemple, l'amplitude est proportionnelle au mouvement du sol.

Lors de l'étape de découpage 130, le signal traité $S_t$, en domaine temporel, est découpé en une pluralité d'échantillons du signal traité St. Chaque signal correspond à un intervalle temporel de découpage.

Chaque intervalle temporel de découpage présente une durée prédéfinie.

La durée de chaque intervalle temporel de découpage est notamment strictement inférieure à la période de traitement.

La durée de l'intervalle temporel de découpage est notamment choisie pour optimiser l'utilisation du bruit sismique naturel (fenêtre plus longue nécessaire) et/ou l'utilisation de sources artificielles (fenêtre correspondant alors à la durée de chaque source artificielle modulée par la propagation entre la source et le ou les capteurs).

En d'autres termes, la durée de l'intervalle temporel de découpage est choisie de manière à obtenir un compromis entre l'utilisation du bruit sismique naturel et l'utilisation de sources artificielles.

La durée de l'intervalle temporel de découpage est, par exemple, comprise entre 5 minutes et 2 heures, par exemple, égale à 60 minutes.

Lors de l'étape de normalisation par l'énergie 140 du signal traité $S_t$, chaque échantillon du signal traité St est normalisé par l'énergie du signal traité St.

Par « normaliser par l'énergie », il est entendu que chaque échantillon du signal traité $S_t$, présente, à l'issue de l'étape, une énergie égale l'un par rapport à l'autre. La normalisation N du signal St est effectuée comme suit :

$$N = \frac{S_t}{\sqrt{|\int S_t|^2}}$$

Lors de l'étape de calcul 150, le contrôleur 14 calcule une corrélation avec lui-même, dit l'autocorrélation de chaque fenêtre de découpage du signal traité St. En notant AC une telle autocorrélation, l'autocorrélation AC est définie comme suit :

$$AC(p,s) = \frac{E[(S_t(p) - \mu_p)(S_t(s) - \mu_s)]}{\sigma_p \sigma_s}$$

avec :

- $E(X)$ : l'espérance mathématique de X (définie ci-dessous) ;
- p et s deux instants différents ;
- $\mu_p$ l'espérance mathématique de $S_t(p)$ ;
- $\mu_s$ l'espérance mathématique de $S_t(s)$ ;
- $\sigma_p$ l'écart-type (voir ci-dessous) de $S_t(p)$, et
- $\sigma_s$ l'écart-type de $S_t(s)$.

L'espérance mathématique est définie comme suit :

$$E(X) = \sum_{i=1}^{n} x_i p_i$$

avec :

- i un entier variant entre 1, 2, .... n, n étant le nombre total d'échantillons pris en compte pour le calcul de l'espérance mathématique ;
- $x_i$ une valeur d'un signal X, et

- $p_i$ la probabilité de la valeur $x_i$ du signal X.

Avec les signes introduites précédemment, l'écart-type $\sigma$ est défini comme suit :

$$\sigma = \sqrt{\sum_{i=1}^{n} p_i\big(x_i - E(X)\big)^2}$$

L'autocorrélation d'une fenêtre de bruit sismique ambiant permet de faire émerger le champ d'onde cohérent qui est mesuré par le capteur 12.

En particulier, la corrélation du champ de bruit sismique ambiant permet de reconstituer un champ cohérent qui contient des ondes de surface. La propriété de ces ondes est la dispersion. Elles échantillonnent des profondeurs différentes de l'environnement 11 en fonction de leur fréquence par exemple. Par exemple, plus basse est la fréquence et plus profond on sonde l'environnement 11.

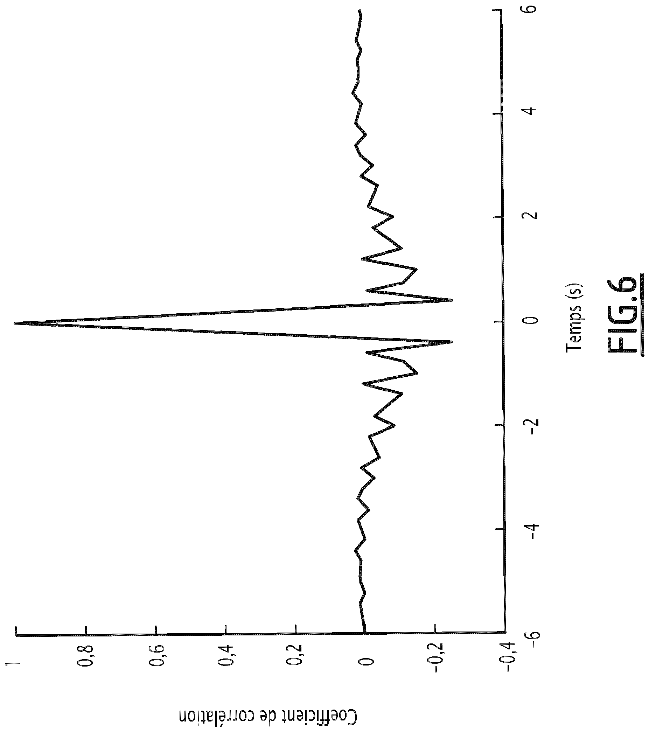

Sur la figure 6, un exemple d'autocorrélation du signal St est représenté. Il est représenté sur l'abscisse le temps t et sur l'ordonnée un coefficient de corrélation. Dans l'exemple, uniquement les instants situés à $\pm$ 6 secondes autour de l'instant de temps zéro sont représentés.

Un coefficient de valeur « 1 » ou « -1 » signifie que le signal mesuré est corrélé fortement avec lui-même parfaitement, et une valeur « 0 » signifie que le signal mesuré est non-corrélé linéairement.

Par exemple, à l'instant de temps zéro, l'autocorrélation du signal mesuré est maximale (et représente l'énergie du signal, normalisée dans le cas présent), et l'autocorrélation présente des oscillations symétriques au point zéro. De préférence, le contrôleur 14 détermine l'autocorrélation AC de chaque fenêtre du signal traité St pour obtenir une succession d'autocorrélations AC.

A partir de la succession d'autocorrélations AC, le contrôleur 14 détermine un corrélogramme, par exemple pour un jour et/ou pour une période supérieure à une journée.

Le corrélogramme est un diagramme affichant l'ensemble des autocorrélations AC calculées lors de l'étape de calcul 150. Le corrélogramme est ainsi un affichage des valeurs des autocorrélations AC sur le temps.

L'autocorrélation AC présente, par exemple, une valeur plus grande ou une valeur plus petite après, par exemple, une journée. Par exemple, lors d'une telle modification des autocorrélations au cours du temps, un mouvement d'un fluide est détecté. La pluralité d'autocorrélations est notamment représentative du mouvement d'un fluide.

Lors de l'étape de définition de la référence 160, le contrôleur 14 calcule une référence $S_{ref}$. La référence $S_{ref}$ est la moyenne de l'ensemble i des autocorrélations AC des échantillons du signal traité St considéré sur une période temporelle de référence.

La référence $S_{ref}$ est, par exemple, calculée comme suit :

$$S_{ref} = \frac{1}{n}\sum_{i=1}^{n} AC_i$$

Dans cette équation, les autocorrélations $AC_i$ sont les autocorrélations calculées à partir des signaux mesurés S pendant la période temporelle de référence. En d'autres termes, la quantité i= 1, ...n correspondant à l'ensemble des signaux mesurés pendant la période temporelle de référence.

La période temporelle de référence est, par exemple, strictement supérieure à chaque intervalle temporel de découpage.

Selon un exemple particulier, la période temporelle de référence est prédéfinie. La période temporelle de référence est, par exemple, comprise entre 20 jours et 40 jours, et encore plus spécifiquement égale à 30 jours. Notamment pour l'application suivi temporel des fluides dans l'environnement 11 à l'échelle crustale, la période temporelle de référence est, par exemple, comprise entre 20 jours et 40 jours.

La période temporelle de référence peut également, par exemple, correspondre à la durée totale des mesures du champ de bruit sismique ambiant.

Lors de l'étape de calcul 170 d'une cohérence, le contrôleur 14 calcule une cohérence temporelle $R_c$ des échantillons du signal traité St.

Pour obtenir la cohérence $R_c$, le contrôleur 14 calcule une matrice R comme suit :

$$R = \frac{cov(S_{ref},\ AC(t))}{\sqrt{\sigma_{ref}\sigma_{AC(t)}}}$$

avec :

- *cov* la covariance,
- *AC(t)* un vecteur des autocorrélations calculées lors de l'étape de calcul 150,
- $\sigma_{ref}$ l'écart-type de la référence $S_{ref}$, et
- $\sigma_{AC(t)}$ l'écart-type des autocorrélations AC(t).

La cohérence $R_c$ est une valeur située en dehors de la diagonale de la matrice R.

La matrice R est, par exemple, de dimension 2x2 et symétrique. Les termes diagonaux sont égaux à 1 et les termes non diagonaux de la matrice R correspondent à la corrélation croisée de l'autocorrélation de la fenêtre de découpage considérée avec l'autocorrélation de référence.

En d'autres termes, dans ce cas, il est :

$$R_c = |R(2,1)| = |R(1,2)|$$

avec R(x,y) la valeur de la matrice à la ligne x et à la colonne y.

Lors de l'étape de détermination 180, le contrôleur 14 détermine la présence du fluide. Le contrôleur 14 détermine notamment la présence du fluide à l'aide de la cohérence temporelle calculée. Ainsi l'information sur l'environnement 11 est fonction de la corrélation ou de l'autocorrélation des signaux blanchis pendant une période de temps donnée, suffisamment longue pour que l'environnement 11 soit bien échantillonné par les ondes sismiques.

Notamment, les variations de la cohérence indiquent la présence de fluides et de variations des propriétés de ces fluides (par exemple en termes de composition, de migration aussi).

Un deuxième mode de réalisation de l'invention est représenté sur la figure 2. Dans ce qui suit, les éléments identiques du deuxième mode de réalisation par rapport au premier mode de réalisation ne sont pas répétés. Seules les différences par rapport au premier mode de réalisation sont mises en évidence.

Selon le deuxième mode de réalisation, le système de détection 10 comprend une pluralité de capteurs. Selon l'exemple de la figure 2, le système de détection 10 comprend un premier capteur 12A et un deuxième capteur 12B. Les premier et deuxième capteurs 12A et 12B sont positionnés à une distance donnée l'un par rapport à l'autre.

Le choix de la distance entre les capteurs 12A, 12B impacte la valeur basse de la plage de fréquence qui pourra être reconstruit à partir de la corrélation du champ de bruit sismique mesuré par les deux capteurs 12A, 12B. Par exemple, la valeur basse impacte la profondeur maximale d'investigation. Ainsi, la distance entre les capteurs 12A et 12B impacte notamment la profondeur maximale d'investigation dans l'environnement 11.

Pour des ondes de surface, la profondeur d'investigation est reliée à la longueur d'onde λ divisée par 3. Cette longueur d'onde est liée à la vitesse *c* des ondes de surface dans l'environnement 11 et à leur fréquence *f* par la relation $\lambda = {}^c\!/_f$ . La distance minimale pour reconstruire une onde de surface par corrélation de bruit est, par exemple, de l'ordre de la longueur d'onde visée λ. Par exemple, si *c* = 3000 *m/s* et *f* = 0,1 *Hz* alors λ = 30000 m ; la profondeur de pénétration est alors de $\lambda\!/_3 = 10000\ m$ ; la distance minimale entre les capteurs 12A et 12B est de l'ordre de 30000 m.

A l'inverse, la distance maximale entre les capteurs est contrôlée par l'atténuation de l'environnement 11 (notamment la diminution de l'amplitude de l'onde avec la distance de propagation).

Chaque capteur 12A et 12B est identique au capteur 12 précité.

Selon ce deuxième mode de réalisation, le système met en oeuvre un procédé de détection dont les étapes identiques au premier mode de réalisation ne sont pas détaillées à nouveau dans ce qui suit. Seules les différences par rapport au premier mode de réalisation sont mises en évidence.

Selon le deuxième mode de réalisation, lors de l'étape de mesure 110, le premier capteur 12A mesure un premier signal mesuré S1 et le deuxième capteur 12B mesure un deuxième signal mesuré S2.

Le premier capteur 12A est notamment distinct du deuxième capteur 12B. Notamment, le premier capteur 12A est synchronisé temporellement avec le deuxième capteur 12B.

L'étape de filtrage 120 est mise en oeuvre pour le premier signal mesuré S1 et le deuxième signal mesuré S2.

Le contrôleur 14 transfère le premier signal mesuré S1 et le deuxième signal mesuré S2 pour obtenir un premier signal fréquentiel $S_{trans1}$ et un deuxième signal fréquentiel $S_{trans2}$.

Ensuite, l'étape d'égalisation 125 est mise en oeuvre pour le premier signal fréquentiel $S_{trans1}$ et le deuxième signal fréquentiel $S_{trans2}$ pour obtenir un premier signal égalisé $S_{eg1}$ et un deuxième signal égalisé $S_{eg2}$ et ensuite un premier signal traité $S_{t1}$ et un deuxième signal traité $S_{t2}$.

Ensuite, les étapes de découpage 130 et de normalisation par l'énergie 140, sont mises en oeuvre pour le premier signal traité $S_{t1}$ et le deuxième signal traité $S_{t2}$.

Lors de l'étape de calcul 150, le contrôleur 14 calcule la corrélation croisée CC d'un échantillon du premier signal traité $S_{t1}$ avec un échantillon correspondant du deuxième signal traité $S_{t2}$.

Par « échantillon correspondant », il est entendu l'échantillon du deuxième signal traité $S_{t2}$ qui est associé dans le temps au premier signal traité $S_{t1}$, le plus souvent les signaux traités $St_1$, $St_2$ sont issus d'une mesure dans le même intervalle de temps.

Par exemple, la corrélation croisée CC est calculée comme suit :

$$CC(p,s) = E[(S_{t1}(p) \, S_{t2}(s)]$$

avec :

- $S_{t1}(p)$ la valeur du premier signal traité $S_{t1}$ à l'instant p, et
- $S_{t2}(s)$ la valeur du deuxième signal traité $S_{t2}$ à l'instant s.

Si le premier capteur 12A est positionné à une distance au deuxième capteur 12B, le contrôleur 14 prend, en outre, en compte un délai de propagation de l'onde dans l'environnement 11 entre le premier capteur 12A et le deuxième capteur 12B.

Dans un exemple, le contrôleur 14 met en oeuvre une suppression de données manquantes.

Par l'expression « suppression de données manquantes », il est entendu une suppression des données de valeur nulle ajoutées lors de l'étape de mesure 110 en cas de données manquantes dans une mesure à un instant.

Le contrôleur 14 détermine alors le maximum de chaque corrélation croisée CC et définit l'instant zéro au maximum.

Lors de l'étape de détermination 180, le contrôleur 14 calcule des corrélations finales. Chaque corrélation finale est une corrélation croisée d'une corrélation croisée CC avec la référence déterminée lors de l'étape de définition de la référence 160.

Chaque corrélation finale présente une valeur maximale à un instant $t_{max}$. Le contrôleur 14 décale chaque corrélation finale en temps, afin d'obtenir des corrélations finales dont le maximum, et donc l'instant $t_{max}$ est au temps zéro.

Le contrôleur 14 détermine la position de la valeur maximale de chaque corrélation ; la corrélation subit une permutation circulaire qui permet de déplacer les échantillons de la corrélation d'un nombre qui correspond à la position du maximum. Ce faisant, le maximum est ramené à la position 0 sur l'axe horizontal du temps dans le corrélogramme. En d'autres termes, la permutation circulaire est susceptible à créer un pseudo-autocorrélogramme, pour lequel le maximum est déjà en zéro par construction.

L'étape de définition de la référence 160, l'étape de calcul 170 d'une cohérence et l'étape de détermination 180 de la présence d'un fluide sont notamment mises en oeuvre pour chaque couple de capteurs, notamment le couple du premier capteur 12A et du deuxième capteur 12B.

Il apparaît ainsi que dans chaque mode de réalisation du procédé de détection, le contrôleur 14 détermine la présence du fluide à l'aide de la cohérence temporelle calculée.

Le contrôleur 14 utilise notamment des tableaux de valeurs pour déterminer la cohérence. Chaque tableau comprend des données techniques du signal mesuré S ou S1, S2, correspondant à des mesures des déplacements du fluide.

La cohérence est une comparaison de la pluralité de corrélations avec la référence. Chaque corrélation de la pluralité de corrélations est associée à un intervalle temporel de découpage. Si la cohérence vaut 1, le signal mesuré et la référence sont identiques.

La cohérence est une mesure du degré de dépendance linéaire du signal mesuré avec la référence. Notamment, la cohérence permet de détecter la présence d'un fluide dans l'environnement 11. La cohérence est une valeur technique correspondant au déplacement ou au changement des propriétés d'un fluide dans l'environnement 11.

Notamment, la cohérence permet d'obtenir une information de déplacement de fluide en absence de grandeurs perturbatrices, telles que des vibrations de sources artificielles.

Par exemple, en fonction de la vitesse de déplacement de fluide ou de la masse ou du volume d'un fluide présent dans l'environnement, la cohérence est modifiée.

Il apparaît que le procédé de détection est applicable à des signaux issus du milieu naturel ou à des signaux générés artificiellement. Par « signaux actifs », il est entendu des signaux, et notamment des ondes mécaniques dans l'environnement, qui sont générés par un actionneur. Par « signaux passifs », il est entendu un signal généré par une source naturelle, par exemple par un déplacement d'un fluide dans l'environnement 11.

Il apparaît également que l'onde est, par exemple, une onde mécanique. Par « onde mécanique », il est entendu dans la présente description une perturbation locale de l'environnement transportant de l'énergie.

Notamment, un déplacement d'une onde mécanique dans un milieu géologique a été considéré dans l'exemple détaillé précédemment. Selon cet exemple, le fluide est notamment un fluide géologique, comme par exemple du pétrole, de l'eau, des gaz naturels, $CO_2$, $H_2$ ou $CH_4$.

Selon une variante, l'onde est une onde électromagnétique.

Un exemple d'application du procédé de détection est la prévision de chocs sismiques ou des tremblements de terre. Par exemple, l'inventeur a mené des expériences dans les Apennins centraux (Italie), une zone sujette aux séismes répétés. Le procédé est basé sur la cohérence temporelle des échantillons. Notamment, le procédé est basé sur la cohérence de formes d'onde corrélées de bruit sismique (ou en anglais « cohérence of seismic noise correlated waveforms », dit CCW). Par exemple, des séismes de L'Aquila en 2009 et de l'Amatrice en 2016 ont montré des schémas oscillatoires particuliers de bruit sismique.

En particulier, la cohérence temporelle des échantillons correspond à une largeur de bande spectrale de la source.

Le procédé de détection présente une pluralité d'avantages.

Notamment, observer la cohérence du signal mesuré S ou des signaux mesurés S1, S2, permet de garantir une détection de fluides précise. Notamment, à cause de l'utilisation d'une partie balistique du signal mesuré et corrélé, c'est-à-dire la partie comportant une amplitude forte, la sensibilité du procédé de cohérence est très élevée.

En même temps, le système de détection 10 est plus simple, car uniquement un petit nombre de capteurs 12 est impliqué pour obtenir des résultats précis. En effet, contrairement à l'état de la technique, dans lequel une pluralité de capteurs est utilisée, un capteur unique 12 suffit pour détecter un fluide de manière fiable selon le procédé de détection. En particulier, calculer les cohérences $R_c$ permet d'obtenir des informations additionnelles à partir des mesures du capteur unique ou d'un petit nombre de capteurs 12, tels que deux capteurs.

En outre, du fait de la normalisation du signal mesuré ou des signaux, la cohérence déterminée est comparable entre plusieurs systèmes de détection 10 ou plusieurs capteurs 12 différents. L'emploi d'une référence permet, par exemple, de comparer des corrélogrammes mesurés par des capteurs 12 différents ou à des lieux différents.

La présente invention peut aussi concerner selon un autre aspect un procédé de détection d'un fluide selon la présente section A, comprenant au moins une étape de :

- mesure par au moins un capteur 12 d'une onde se propageant dans un environnement 11 de l'onde, pour obtenir au moins un signal mesuré, l'onde étant notamment une onde mécanique,
- découpage du signal mesuré sur une pluralité d'intervalles temporels de découpage de durée prédéfinie pour obtenir des échantillons du signal mesuré,
- calcul de la cohérence temporelle des échantillons, et
- détermination de la présence du fluide à l'aide de la cohérence temporelle calculée.

Selon une section B, lors de l'étape de découpage, chaque intervalle temporel de découpage présente une même durée, de préférence une durée comprise entre 5 minutes et 2 heures.

Selon une section C, le procédé de détection comprend, en outre, une étape de filtrage et d'égalisation du signal mesuré dans une gamme de fréquences prédéfinie, de préférence entre 30 secondes et 2 Hertz.

Selon une section D, le procédé de détection comprend, en outre, une étape de calcul de référence, lors de laquelle une référence est calculée, et dans lequel l'étape de calcul de la cohérence temporelle comprend une comparaison d'une pluralité de corrélations avec la référence, chaque corrélation étant associée à un intervalle temporel de découpage.

Selon la section précédente, la référence peut être la moyenne de corrélations d'échantillons du signal mesuré pendant une période temporelle de référence.

Selon la section précédente, la période temporelle de référence peut être strictement supérieure au maximum des intervalles temporels de découpage, de préférence comprise entre 20 jours et 40 jours.

Selon l'une quelconque des sections précédentes, le procédé de détection peut comprendre, en outre, une étape de normalisation de chaque échantillon du signal mesuré par l'énergie du signal mesuré.

Selon l'une quelconque des sections précédentes, lors de l'étape de mesure, le signal mesuré est mesuré par un capteur 12 unique.

Selon l'une quelconque des sections précédentes, lors de l'étape de mesure, au moins un signal mesuré comprend un premier signal mesuré par un premier capteur et un deuxième signal mesuré par un deuxième capteur, le premier capteur étant distinct du deuxième.

La présente invention peut aussi concerner selon un autre aspect un système de détection d'un fluide, le système comprenant :

- au moins un capteur 12 configuré pour mesurer une onde se propageant dans un environnement 11 de l'onde pour obtenir au moins un signal de mesure, l'onde étant notamment une onde mécanique, et
- un contrôleur 14 configuré pour :
- découper le signal mesuré sur une pluralité d'intervalles temporels de découpage de durée prédéfinie pour obtenir des échantillons du signal mesuré,
- calculer la cohérence temporelle des échantillons, et
- déterminer de la présence du fluide à l'aide de la cohérence temporelle calculée.

**Revendications**

1. Procédé de détection d'un fluide, comprenant au moins une étape de :

   - mesure (110) par au moins deux capteurs (12A et 12B) d'ondes se propageant dans un environnement (11) susceptible de comporter le fluide enfoui, pour obtenir au moins deux signaux mesurés (S1 et S2), les capteurs étant positionnés deux à deux à une distance donnée,
   - filtrage (120) de chaque signal mesuré (S1 et S2) dans une gamme de fréquences prédéfinie pour obtenir un premier signal fréquentiel $S_{trans1}$ et un deuxième signal fréquentiel $S_{trans2}$ et
   - égalisation (125) du premier signal fréquentiel $S_{trans1}$ et du deuxième signal fréquentiel $S_{trans2}$ pour obtenir un premier signal égalisé $S_{eg1}$ et un deuxième signal égalisé $S_{eg2}$ et ensuite un premier signal traité $S_{t1}$ et un deuxième signal traité $S_{t2}$,
   - découpage (130) de chaque signal traité $S_{t1}$ et $S_{t2}$ sur une pluralité d'intervalles temporels de découpage de durée prédéfinie pour obtenir des échantillons de chaque signal traité $S_{t1}$ et $S_{t2}$,
   - normalisation (140) de chaque échantillon par l'énergie du signal traité $S_{t1}$ et $S_{t2}$ correspondant ;
   - calcul (150) d'une corrélation croisée (CC) d'un échantillon du premier signal traité $S_{t1}$ avec un échantillon temporellement correspondant du deuxième signal traité $S_{t2}$,
   - calcul de référence (160), lors de laquelle une référence est calculée,
   - pour chaque couple de capteurs (12A et 12B), calcul (170) de la cohérence temporelle (Rc) des échantillons sur la base des corrélations croisées (CC) calculées (150) comprenant une comparaison d'une pluralité de corrélations croisées avec la référence, chaque corrélation croisée étant associée à un intervalle temporel de découpage, et
   - détermination (180) de la présence du fluide à l'aide de la cohérence temporelle (Rc) calculée (170).

2. Procédé de détection selon la revendication 1, dans lequel, lors de l'étape de découpage, chaque intervalle temporel de découpage présente une même durée, de préférence une durée comprise entre 5 minutes et 2 heures.

3. Procédé de détection selon la revendication 1 ou 2, dans lequel la gamme de fréquences prédéfinie est comprise entre 30 secondes et 2 Hertz.

4. Procédé de détection selon la revendication 1, dans lequel la référence est la moyenne des corrélations croisées des échantillons pendant une période temporelle de référence.

5. Procédé de détection selon la revendication 4, dans lequel la période temporelle de référence est strictement supérieure au maximum des intervalles temporels de découpage, de préférence comprise entre 20 jours et 40 jours.

6. Procédé de détection selon l'une quelconque des revendications 1 à 5, dans lequel le calcul (170) de la cohérence temporelle est réalisé en outre en fonction de tableaux de valeurs comprenant des données techniques des signaux mesurés (S1 et S2) correspondant à des mesures de déplacement du fluide.

7. Procédé de détection selon l'une quelconque des revendications 1 à 6, dans lequel la corrélation croisée CC est calculée comme suit :

$$CC(p,s) = E[(S_{t1}(p) \, S_{t2}(s)]$$

avec :

- $S_{t1}(p)$ la valeur du premier signal traité $S_{t1}$ à l'instant p,
- $S_{t2}(s)$ la valeur du deuxième signal traité $S_{t2}$ à l'instant s, et
- E(X) : l'espérance mathématique de X.

8. Procédé de détection selon l'une quelconque des revendications 1 à 7, dans lequel les ondes sont des ondes mécaniques.

9. Procédé de détection selon l'une quelconque des revendications 1 à 7, dans lequel les ondes sont des ondes électromagnétiques.

10. Procédé de détection selon l'une quelconque des revendications 1 à 9, dans lequel un contrôleur (14) met en oeuvre une suppression de données manquantes, le contrôleur déterminant alors le maximum de chaque corrélation croisée (CC) et définissant l'instant zéro au maximum.

11. Procédé de détection selon l'une quelconque des revendications 1 à 10, applicable à des signaux issus de milieu naturel ou à des signaux générés artificiellement.

12. Procédé de détection selon l'une quelconque des revendications 1 à 11, dans lequel les capteurs sont distincts deux à deux.

13. Procédé de détection selon l'une quelconque des revendications 1 à 12, dans lequel les capteurs sont identiques entre eux.

14. Procédé de détection selon l'une quelconque des revendications 1 à 13, dans lequel les capteurs sont synchronisés temporellement entre eux.

15. Système de détection (10) d'un fluide, le système (10) comprenant :

   - au moins deux capteurs (12), et
   - un contrôleur (14),

configurés pour mettre en oeuvre le procédé de détection selon l'une quelconque des revendications précédentes.

FIG.1

FIG.2

```
┌─────────────────────────┐
│           110           │
└─────────────────────────┘
            │
            ▼
┌─────────────────────────┐
│           120           │
└─────────────────────────┘
            │
            ▼
┌─────────────────────────┐
│           125           │
└─────────────────────────┘
            │
            ▼
┌─────────────────────────┐
│           130           │
└─────────────────────────┘
            │
            ▼
┌─────────────────────────┐
│           140           │
└─────────────────────────┘
            │
            ▼
┌─────────────────────────┐
│           150           │
└─────────────────────────┘
            │
            ▼
┌─────────────────────────┐
│           160           │
└─────────────────────────┘
            │
            ▼
┌─────────────────────────┐
│           170           │
└─────────────────────────┘
            │
            ▼
┌─────────────────────────┐
│           180           │
└─────────────────────────┘
```

FIG.3

FIG.4

FIG.5

FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016063125 A1
- WO 0073820 A1
- US 5563949 A
- WO 2017184340 A1

**Littérature non-brevet citée dans la description**

- **CHRISTOPHE VOISIN et al.** *Groundwater Monitoring with Passive Seismic Interferometry*
- **CHRISTOPHE VOISIN et al.** *Seismic noise monitoring of the water table in a deep-seated, slow-moving landslide*